# FASCICULE DE BREVET EUROPEEN

(11) **EP 0 686 168 B1**
(45) Date de publication et mention de la délivrance du brevet: **19.09.2001**
(21) Numéro de dépôt: 94906100.6
(22) Date de dépôt: 21.02.1994
(51) Int. Cl.: C08J 5/22

(54) **MEMBRANE MONOFILM, PROCEDE POUR SON OBTENTION ET UTILISATION DE CELLE-CI**
MONOFILMMEMBRAN, VERFAHREN ZU IHRER HERSTELLUNG UND IHRE VERWENDUNG
SINGLE-FILM MEMBRANE, PREPARATION METHOD THEREFOR AND USE THEREOF

(30) Priorité: 24.02.1993 BE 9300174
(43) Date de publication de la demande: 13.12.1995
(73) Titulaire: UNIVERSITE LIBRE DE BRUXELLES, B-1050 Bruxelles (BE)
(72) Inventeur: EL MOUSSAOUI, Rachid, B-1070 Bruxelles (BE); HURWITZ, Henri, B-1640 Rhode-St.-Genese (BE)
(74) Mandataire: Van Malderen, Joelle
(86) Numéro de dépôt international: BE9400014
(87) Numéro de publication internationale: WO9419399

(56) Documents cités:
- EP-A- 0 459 820
- WO-A-89/01059
- GB-A- 981 562
- GB-A- 1 588 542
- GB-A- 2 122 543
- US-A- 4 355 116
- F. de Korosy, E. Zeigerson, Israel J.Chem, Vol 9 (1971) pp 484-497

## Description

### Objet de l'invention

L'invention concerne une nouvelle membrane monofilm, son procédé d'obtention ainsi que son utilisation pour la production de bases et d'acides, pour la régulation du pH et/ou pour l'électrodialyse d'une solution aqueuse.

### Etat de la technique et arrière-plan technologique à la base de l'invention

Les acides et les bases peuvent être produits à partir de leurs sels par électrolyse ou électrodialyse.

Sous l'effet de l'application d'une différence de potentiel, ces procédés permettent de former dans un milieu aqueux, à partir par exemple de chlorure de sodium, de l'acide chlorhydrique (HCl) et de la soude caustique (NaOH).

En électrodialyse, pour obtenir ces différents composants, on utilise des membranes bipolaires échangeuses d'ions.

Différents types de membranes bipolaires ont été proposés. Les membranes de type bifilm sont constituées de deux membranes monofonctionnelles, une membrane échangeuse cationique et une membrane échangeuse anionique qui sont accolées. Dans un autre type de membrane, un film échangeur cationique est recouvert sur une face d'un enduit comprenant des groupes échangeurs anioniques.

Les membranes bipolaires monofilms bifonctionnelles sont constituées d'une membrane polymérique comprenant une partie échangeuse cationique et une partie échangeuse anionique.

Dans la demande de brevet GB-2 122 543, on décrit une membrane bifilm constituée d'un film échangeur de cations et d'un film échangeur d'anions traités de manière à ce que l'interface de la membrane bipolaire constituée des deux films conjoints contienne un ou plusieurs composés inorganiques susceptibles de dissocier l'eau en ses composants H⁺ et OH⁻.

Les composés sont constitués d'un des cations du groupe la au groupe 4a, des lanthanides et actinides du tableau périodique. L'anion est choisi dans le groupe des tétraborates, métaborates, silicates, métasilicates, tungstates, chlorates, phosphates, sulfates, chromates, hydroxyle, carbonates, molybdates, chloroplatinates, orthovanadates et tellurates.

Le document Electrochimica Acta vol. 31, pages 1175-1176 (1986) décrit un procédé consistant à enduire les surfaces des membranes monofilm fonctionnalisées avant leur accolement à l'aide d'une solution contenant au moins un des électrolytes suivant: tungstate de sodium, nitrate chromique, métasilicate de sodium, trichlorure de ruthénium, sulfate d'indium, sulfate céreux, chromate de sodium, chlorure stanneux, dihydrogénophosphate de sodium, nitrate de thorium et chlorure de zirconium.

Selon le document AU-B-88/2257, des membranes bipolaires peuvent être réalisées de plusieurs manières.

Selon un premier mode d'exécution, on soumet la membrane anionique et la membrane cationique à un prétraitement par une solution aqueuse contenant au moins un cation monovalent ou polyvalent autre que le sodium et le potassium, la solution ayant un pH alcalin et les membranes prétraitées sont ensuite disposées conjointement l'une face à l'autre.

Selon un deuxième mode d'exécution, caractérisé par une scission d'un prétraitement en deux étapes, on soumet la membrane anionique et la membrane cationique à un prétraitement par une solution aqueuse contenant au moins un cation monovalent ou polyvalent autre que le sodium et le potassium, les membranes prétraitées sont ensuite soumises séparément à un traitement avec une solution alcaline et disposées conjointement l'une face à l'autre.

Selon un troisième mode d'exécution, on soumet la membrane anionique et la membrane cationique à un prétraitement par une solution aqueuse contenant au moins un cation monovalent ou polyvalent autre que le sodium et le potassium, les membranes prétraitées sont ensuite disposées conjointement l'une face à l'autre pour former une membrane bipolaire, cette membrane bipolaire est alors traitée avec une solution alcaline.

Dans ce procédé, le prétraitement des membranes qui peut être effectué à la température ambiante, est de préférence effectué à chaud à des températures s'étalant de 60°C à 100°C.

Cependant, ces types de membranes bifilms présentent l'inconvénient de posséder une interface résultant d'un accolement qui doit posséder d'excellentes propriétés d'adhésion, être capable de contenir un catalyseur sous forme d'un composé inorganique, être hydrophile et présenter une très faible résistance électrique.

La confection de ce type de membrane reste donc extrêmement délicate. Leur endurance est amoindrie par leurs facultés de se décoller ou de former des poches dans la région de l'interface, ce qui altère leurs performances chimiques et électriques et leur stabilité mécanique au cours de leur utilisation.

La demande de brevet GB-981.562 décrit un procédé de préparation d'une membrane monofilm bipolaire dans lequel les polyoléfines de la matrice polymérique de ladite membrane sont fonctionnalisées par chlorosulfonation.

La demande de brevet US-4 355 116 décrit un procédé de préparation d'une membrane monofilm bipolaire dans lequel une matrice polymérique greffée par du styrène et réticulée par du divinylbenzène est fonctionnalisée d'un côté par une chlorosulfonation et une hydrolyse et de l'autre côté par une chlorométhylation suivie d'une amination par une polyamine et par une amine monofonctionnelle.

La demande de brevet GB-1 588 542 décrit un procédé de traitement de la surface d'une membrane monofilm dont la matrice polymérique est constituée d'un polymère d'une oléfine et de polystyrène, réticulée par du divinylbenzène. Ce traitement superficiel cherche à rendre les groupements aromatiques de ladite matrice polymérique plus accessibles à une fonctionnalisation par chlorosulfonation et à une hydrolyse d'un côté et de l'autre côté par une chlorométhylation suivie par une amination.

Cependant, dans les membranes monofilms obtenue par ces procédés, il est difficile d'obtenir un front net entre la partie échangeuse de cations et la partie échangeuse d'anions car elles s'interpénètrent et créent ainsi une interface à haute résistance électrique.

Aussi, de telles membranes monofilms présentent une résistance électrique trop élevée pour pouvoir être utilisées de manière industrielle dans la production de base et d'acide par électrodialyse.

### Buts de la présente invention

La présente invention vise à fournir une nouvelle membrane qui ne présente pas les inconvénients de l'état de la technique susmentionné, en particulier une membrane dépourvue de zones prédisposées à la formation de poches ou de vésicules, plus stable mécaniquement. On cherche en particulier une faible résistance électrique et un rendement faradique supérieur à 80% et de préférence à 90% et un potentiel de dissociation de l'eau inférieur à 1,8 V, de préférence à 1,3 V.

Un autre but de la présente invention vise à obtenir une membrane qui puisse être utilisée dans n'importe quel sens, c'est-à-dire de ne pas dépendre d'une orientation privilégiée lorsqu'elle est insérée dans un électrodialyseur.

La présente invention a également pour but de mettre au point un nouveau procédé de préparation d'une telle membrane.

### Eléments caractéristiques de l'invention

La présente invention concerne une membrane monofilm, comportant au moins une interface hydrophile susceptible de dissocier l'eau en ses composants H⁺ et OH⁻ et comportant un ou plusieurs composés inorganiques.

Le composé inorganique est choisi parmi le groupe constitué par les sels et/ou les hydroxydes comprenant un cation métallique des éléments de la colonne 2a, des éléments de transition, des éléments appartenant aux groupes des lanthanides, des éléments appartenant aux groupes des actinides du tableau de Mendeleev et/ou un mélange d'entre eux.

De préférence, ledit composé inorganique est un dérivé du groupe constitué par les sels et/ou les hydroxydes de titane, de zirconium, de vanadium, de niobium, de chrome, de molybdène, de tungstène, de manganèse, de fer, de ruthénium, d'osmium, de cobalt, de rhodium, de nickel, de paladium, de cuivre, d'argent, de zinc, de cadmium, de lanthane, de cérium, de thorium et/ou un mélange d'entre eux.

Le sel est avantageusement formé à partir d'un ou de plusieurs oxyanions.

De préférence, ce sel est choisi parmi le groupe constitué par les tétraborates, les métaborates, les silicates, les métasilicates, les tungstates, les chlorates, les phosphates, les sulfates, les nitrates, les chromates, les carbonates, les molybdates, les chloroplatinates, les orthovanadates, les tellurates et/ou un mélange d'entre eux.

Avantageusement, le monofilm de la membrane selon l'invention est une matrice polymérique constituée de polymères dérivés des monomères choisis parmi le groupe constitué par 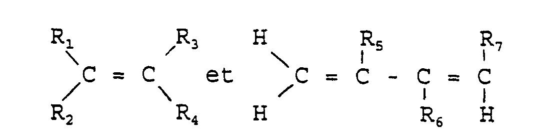 dans lesquels R₁ à R₇ sont des substituants choisis parmi le groupe constitué par l'hydrogène, le chlore, le fluor, les radicaux alkyle de 1 à 5 atomes de carbone, les radicaux phényle, les copolymères de ceux-ci ainsi que les polymères et/ou copolymères chlorés et/ou fluorés de ceux-ci. De préférence, le polymère est choisi parmi le groupe constitué par le polyéthylène (PE), le polychlorure de vinyle (PVC), le Téflon® (polytétrafluoroéthylène ou PTFE), le poly(vinylènedifluorure) (PVDF), l'éthylènetétrafluoroéthylène (ETFE), le polypropylène (PP), le poly(fluoroéthylène propylène) (PFEP) le polystyrène et/ou un mélange d'entre eux.

Préférentiellement le ou les polymères de la matrice polymérique sont greffés par du styrène et réticulés par du divinylbenzène (DVB).

Avantageusement, la membrane selon l'invention comprend un ou plusieurs composés inorganiques introduits au niveau de l'interface hydrophile et/ou dans une couche échangeuse d'ions de la membrane par électrodialyse, par diffusion et/ou par conditionnement.

La membrane selon l'invention possède de préférence une épaisseur comprise entre 50 et 150 microns.

Selon une première forme d'exécution de l'invention, la membrane monofilm est une membrane bipolaire comportant une couche échangeuse d'anions et une couche échangeuse de cations.

La couche échangeuse de cations de la membrane est obtenue par chlorosulfonation et hydrolyse en milieu basique et la face échangeuse d'anions de la membrane est obtenue par chlorosulfonation et amination, avec formation d'un composé d'ammonium quaternaire.

De préférence, 92 à 50% de ladite membrane constitue la face échangeuse de cations et est chlorosulfonatée et hydrolysée par une solution basique et 8% à 50% de ladite membrane constitue la face échangeuse d'anions est chlorosulfonatée et aminée avec formation d'ammonium quaternaire.

Selon une deuxième forme d'exécution de l'invention, la membrane est une membrane ambibipolaire comportant une couche échangeuse de cations insérée entre deux couches échangeuses d'anions.

L'invention concerne également un procédé d'obtention de la membrane bipolaire monofilm, caractérisé en ce que l'on soumet une membrane monofilm constituée d'une matrice polymérique à un traitement de chlorosulfonation sur ses deux faces, suivi d'un traitement d'amination d'une des faces de la membrane et d'une quaternisation; l'autre face subissant une hydrolyse en milieu basique et on fait pénétrer au niveau de l'interface hydrophile et/ou dans une couche échangeuse d'ions de ladite membrane un ou plusieurs composés inorganiques du type précité.

L'invention concerne également un procédé d'obtention d'une membrane ambibipolaire monofilm dans lequel on soumet une membrane monofilm constituée d'une matrice polymérique à un traitement de chlorosulfonation sur ses deux faces, suivi d'un traitement d'amination des deux faces; on soumet ensuite la membrane à une hydrolyse en milieu basique et à une quaternisation des groupes aminés et on fait pénétrer au niveau de l'interface hydrophile et/ou dans une couche échangeuse d'ions de ladite membrane, un ou plusieurs composés inorganiques du type précité.

Selon l'invention on fait pénétrer un ou plusieurs composés inorganiques du type précité dans la membrane monofilm par électrodialyse, par diffusion et/ou par conditionnement.

De préférence, le traitement de chlorosulfonation s'effectue par trempage de la membrane dans une solution d'acide chlorosulfonique dans un solvant organique et le traitement d'amination s'effectue par écoulement d'une solution contenant une molécule choisie parmi le groupe constitué par une diamine, une polyamine et/ou un mélange de plusieurs polyamines sur une ou plusieurs des faces de la membrane.

Dans le procédé susmentionné, l'hydrolyse en milieu basique s'effectue par une solution de NaOH ou de KOH.

La membrane monofilm selon l'invention peut être utilisée pour la production d'acides et de bases, ainsi que pour la régulation du pH et/ou pour l'électrodialyse d'une solution aqueuse.

### Brève description des figures

- La figure 1 représente de manière schématique la formation d'acide et de base par une membrane selon l'invention, disposée entre une anode et une cathode dans une solution aqueuse d'un sel.

- La figure 2 représente de manière schématique la formation d'acide et de base par une membrane ambibipolaire (ou réversible) disposée entre une anode et une cathode dans une solution aqueuse de sel.
- La figure 3 représente de manière schématique une cellule à trois compartiments comprenant des membranes monofilms selon l'invention pour la production d'acide et de base.

### Description d'une forme d'exécution préférée de l'invention

La présente invention repose sur l'intérêt que présente une membrane monofilm comprenant une interface hydrophile comportant un ou plusieurs composés inorganique; pour la production d'acides et de bases.

On entend par les termes "interface hydrophile", une portion de la membrane disposée entre une couche échangeuse d'anions et une couche échangeuse de cations et qui est susceptible pour une orientation appropriée du courant de dissocier l'eau en ses composants H⁺ et OH⁻.

La membrane monofilm selon l'invention peut être une membrane bipolaire ou une membrane ambibipolaire (ou réversible).

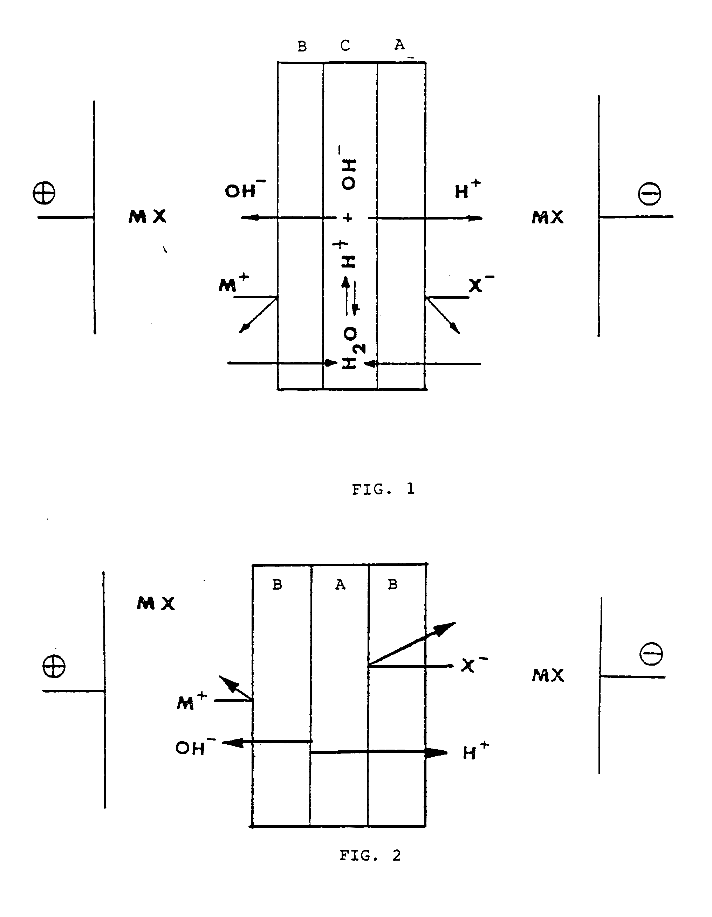

Une membrane bipolaire telle que représentée à la figure 1 comporte entre une couche échangeuse de cations (A) et une couche échangeuse d'anions (B), l'interface hydrophile (C) susceptible de dissocier l'eau en ses composants H⁺ et OH⁻

Une membrane ambibipolaire (ou réversible) selon la présente invention, comprend une couche échangeuse de cations (A) disposée entre deux couches échangeuses d'anions (B).

Une membrane ambibipolaire comporte au moins une interface hydrophile qui, lorsque la membrane est disposée entre des électrodes, dissocie l'eau en ses composants H⁺ et OH- (cfr. figure 2).

La présente invention sera décrite de manière plus détaillée dans les exemples suivants donnés uniquement à titre d'illustration non limitative de la présente invention.

### Exemple 1

La matrice polymérique du monofilm formant la membrane est constituée d'éthylènetétrafluoroéthylène (ETFE) greffé par du styrène (Tg=48,5%) et réticulé par du divinylbenzène (DVB)

La fonctionnalisation de cette matrice est effectuée dans les étapes suivantes:
- gonflement de la membrane plongée dans un solvant organique (CCl₄) à température ambiante pendant une durée de 24 heures;
- chlorosulfonation des deux faces de la membrane plongée dans une solution à 10% d'acide chlorosulfonique (HClSO₃) dans CCl₄ et à température ambiante. La durée de chlorosulfonation est de 10 heures sous agitation magnétique;
- rinçage du film chlorosulfoné plongé dans un solvant organique (éther anhydre) pendant 3 à 4 heures;
- amination d'une face de la membrane en laissant couler une certaine quantité (1 ml/4 cm² de surface de la membrane) d'une diamine NH₂-(CH₂)₃-NCH₃CH₃ à température ambiante et pendant 30 minutes;
- quaternisation de l'amine tertiaire par rinçage de la membrane dans du méthanol, puis par trempage de celle-ci dans une solution de 5 à 10% de CH₃I dans le méthanol, à température ambiante sous agitation magnétique pendant six heures;
- hydrolyse de l'autre face de la membrane. La membrane chlorosulfonée, aminée et quaternisée sur une face est conditionnée dans une solution de NaOH (10%) à température ambiante pendant 12 heures puis celle-ci est conditionnée deux fois pendant 6 heures dans de l'HCl 1N et pendant 6 heures dans du NaOH 10%.

La membrane ainsi obtenue est une membrane bipolaire dont la partie échangeuse de cations comporte des sulfonates et la partie échangeuse d'anions comporte des ammoniums quaternaires.

La capacité d'échange de la membrane est exprimée pour chacune des couches par le nombre de sites échangeurs d'ions, par gramme de la membrane bipolaire.

En vue de réaliser le conditionnement, la membrane bipolaire est traitée dans une solution d'un sel de Ni²', de Co²⁺, de Cr³⁺, de Rh³⁺, de Zr³⁺, de Ce³⁺, de Ru³⁺ ou un mélange d'entre eux de 5% à 15% en poids par volume d'eau distillée.

Cette incorporation est complétée par exemple par un procédé d'électrodialyse ou d'équilibrage à chaud dans une solution alcaline, de préférence NaOH 10%.

Le temps de conditionnement est de 20 heures.

Après le conditionnement, on gonfle la membrane dans une solution de 10% de NaOH en poids par volume d'eau distillée à une température de 70°C pendant 30 minutes.

La différence de potentiel transmembranaire enregistrée à des valeurs de 100 mA/cm² est de 2,3 V.

Le rendement faradique en milieu NaCl 1M sous agitation et à 100 mA/cm² est de 85%.

### Exemple 2

Une membrane monofilm d'un polymère polyéthylène (PEHD), PVDF ou ETFE (présentant un taux de greffage par du styrène de 64%) est préparée selon le même mode opératoire que dans l'exemple précédent tout en portant la durée de chlorosulfonation à 15 heures.

La capacité échangeuse d'ions de la couche cationique est de Cc = 2,16 meq/g.

La capacité échangeuse d'ions de la couche anionique est de Ca = 0,35 meq/g.

Cette membrane est ensuite traitée pour y incorporer un composé inorganique (catalyseur) intervenant dans l'étape de la dissociation de l'eau.

L'incorporation du composé inorganique s'effectue par conditionnement selon le même mode opératoire que précédemment décrit suivi par un procédé d'électrodialyse ou par un procédé d'équilibrage à chaud dans une solution alcaline NaOH 10%.

Dans un procédé d'électrodialyse, la membrane obtenue est conditionnée dans une solution de Cr(NO₃)₃ 9H₂O 0,1 M pendant 24 heures et à température ambiante. Après le conditionnement, on désorbe le Cr³⁺ adsorbé dans l'eau distillée sous agitation pendant 3 heures.

La membrane bipolaire selon l'invention est placée dans un électrodialyseur à deux compartiments avec la face échangeuse de cations dirigée vers une anode et la face échangeuse d'anions dirigée vers une cathode.

Le compartiment anionique contient une solution de HCl 0,1N et le compartiment cationique contient une solution de KOH 0,1N.

L'électrodialyse s'effectue à une densité de courant de 10 mA/cm² pendant 10 minutes.

La différence de potentiel transmembranaire à 100 mA/cm² est stable à des valeurs inférieures à 2 V.

Dans le cas où l'incorporation du composé inorganique s'effectue par équilibrage à chaud (70 °C), la différence de potentiel transmembranaire enregistrée à des valeurs de 100 mA/cm² se situe en-dessous de 1,3 V et généralement à 1,1 V. Le rendement faradique en milieu NaCl 1M et à 100 mA/cm² est égal ou supérieur à 80%, à 150 mA/cm² en milieu NaOH 20% du côté anodique et HCl 4% du côté cathodique est supérieur à 92%. Les propriétés de la membrane restent constantes pendant une durée d'expérimentation de plusieurs semaines.

### Exemple 3

Un film polyéthylène haute densité, chargé styrène, réticulé par divinyle benzène (T_{G}=60%, T_{R}=10%), est mis à gonfler dans CCl₄ à température ambiante pendant quatre jours. Il est chlorosulfoné dans un mélange acide chlorosulfonique/tétrachlorure de carbone 10% à température ambiante pendant 38 à 40 heures. Le film est ensuite rincé dans l'éther anhydre pendant une dizaine de minutes. Sur le film ainsi traité, on laisse couler sur une des faces une certaine quantité d'une diamine pure NH₂-(CH₂)₃-N(CH₃)₂ (0,7 ml par cm² de surface de membrane) pendant deux heures à température ambiante. La membrane ainsi préparée est rincée à l'eau distillée et mise à gonfler dans le méthanol pendant quatre à six heures. Elle est hydrolysée ensuite dans une solution NaOH 0,1N à 50°C pendant 18 heures. Cette étape est suivie d'un rinçage à l'eau et d'une quaternisation dans une solution de CH₃I/CH₃OH 10% à 40 °C pendant 20 heures. Après ce traitement la membrane est gonflée dans NaOH 0,1N pendant 24 heures à température ambiante.

Le conditionnement de la membrane bipolaire ainsi obtenue s'effectue par imprégnation dans une solution aqueuse à 15% Cr(NO₃)₃ à température ambiante suivie d'un gonflement dans une solution NaOH 10% à 70°C pendant 30 minutes.

La différence de potentiel transmembranaire enregistrée à des valeurs de 100 mA/cm² en milieu symétrique NaCl 1M se situe au dessous de 1,3 V et généralement à 1,1 V. Le rendement faradique en milieu symétrique NaCl 1M et à 100 mA/cm2 est égal ou supérieur à 87%, à 150 mA/cm² en milieu NaOH 20% du côté anodique et HCl 5% du côté cathodique est supérieur à 98%. Les propriétés de la membrane se conservent pendant une durée d'expérimentation de plusieurs semaines.

### Exemple 4

Une membrane est traitée de la même façon que dans l'exemple 3, sauf que dans l'étape d'amination, la diamine pure H₂N-(CH₂)₃-N(CH₃)₂ est remplacée par le 1,3 diaminopropane pur H₂N-(CH₂)₃-NH₂ ou par un mélange de ces deux diamines.

### Exemple 5

Une membrane ambibipolaire est préparée avec une matrice polymérique monofilm PEHD chargé styrène comme celle utilisée dans l'exemple 3 et est traitée de la même manière que décrite dans l'exemple 3, sauf en ce qui concerne l'étape d'amination où les deux faces de la membrane sont mises en contact par trempage avec une solution de 1,3 diaminopropane pure pendant trente minutes. Le catalyseur Cr(NO₃)₃ 9H₂O est introduit par conditionnement et diffusion à chaud.

### Exemple 6

Le composé inorganique peut également être introduit selon l'invention à température ambiante dans la membrane en la conditionnant dans NaCl 1M à température ambiante et en la plaçant dans un électrodialyseur à deux compartiments avec la partie échangeuse anionique face à la cathode. Le catholyte étant constitué par une solution NaOH 1 M et la partie échangeuse cationique face à l'anode, l'anolyte comprenant une solution de HCl 1M et Cr(NO)₃9H₂O 1M dans un rapport de volume de 1/10. La densité de courant appliquée pendant 30 minutes est de 25 mA/cm⁻².

La membrane bipolaire ainsi réalisée présente une différence de potentiel transmembranaire enregistrée à des valeurs de 100 mA/cm² en dessous de 1,5 V et généralement de 1,3 V. Le rendement faradique en milieu NaCl 1 M et à 100 mA/cm² est égal ou supérieur à 92%.

La membrane monofilm selon l'invention présente le double avantage de posséder une importante résistance mécanique et une faible résistance électrique.

En effet, il apparaît que lorsque un ou plusieurs composés inorganiques sont incorporés (comme catalyseur) au niveau de l'interface de la face échangeuse de cations et de la face échangeuse d'anions, dans une membrane monofilm bipolaire, il est possible de réduire de manière importante la résistance électrique de ladite membrane.

La membrane monofilm selon l'invention présente l'avantage d'être plus résistante mécaniquement et plus aisément manipulable qu'une membrane double film préparée selon les procédés de l'état de la technique.

La membrane monofilm selon l'invention permet également de garantir une bonne perméabilité de l'eau de la solution externe vers l'interface centrale hydrophile comportant le ou les composés inorganiques.

Cette interface hydrophile possède avantageusement une faible épaisseur de manière à permettre une dissociation plus efficace de l'eau suivie d'une diffusion des ions H⁺ et OH⁻ vers les solutions externes.

La membrane monofilm décrite ci-dessus a l'avantage d'être obtenue par simple chlorosulfonation sur toute son épaisseur et de présenter une interface nette accueillante au catalyseur, entre la partie sulfonamide, ultérieurement convertie en sites ammonium, et la partie sulfonatée et ceci selon un procédé de synthèse peu coûteux et sans difficultés majeures.

De plus, la membrane monofilm selon l'invention présente un rendement énergétique comparable, sinon meilleur que celui d'une membrane double film de l'état de la technique.

En outre, la membrane selon l'invention de type ambibipolaire ou réversible, présente l'intérêt de pouvoir être utilisée dans les deux sens, c'est-à-dire de ne dépendre d'aucune orientation privilégiée lorsqu'elle est insérée dans un électrodialyseur (cfr. figure 2). Cette propriété a l'avantage de supprimer toute erreur de manipulation.

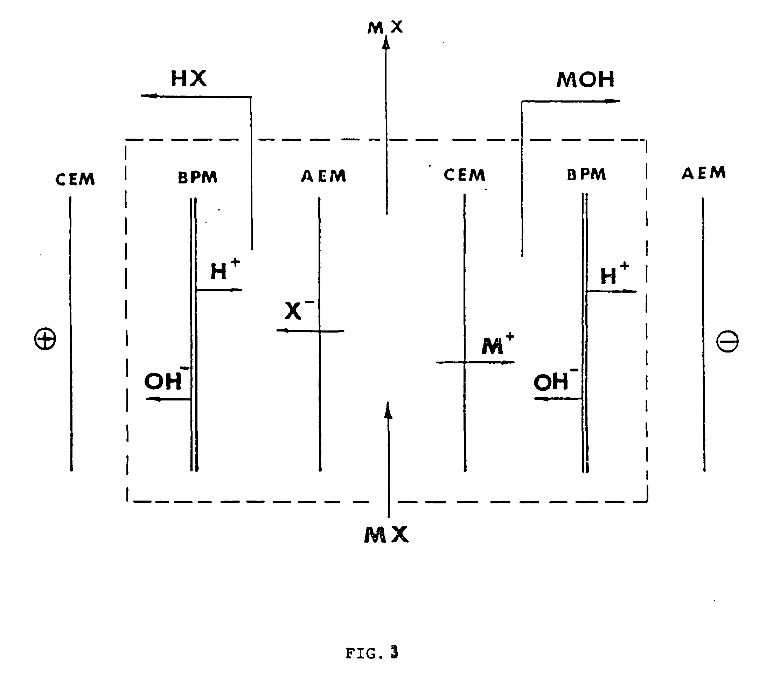

La production d'acide et de base peut être obtenue par des membranes monofilms selon l'invention introduites dans des cellules classiques à trois compartiments disposés entre une anode et une cathode comme représenté à la figure 3.

Chaque membrane monofilm (BPM) selon l'invention encadre une membrane échangeuse d'anions (AEM) et une membrane échangeuse de cations (CEM) entre lesquelles se trouve une solution aqueuse de sel (MX). L'acide (HX) et la base (MOH) sont formées dans les compartiments situés entre les membranes monofilms selon l'invention et les membranes échangeuses d'anions et de cations.

La membrane monofilm selon l'invention peut être également utilisée pour la régulation du pH d'une solution aqueuse.

La membrane bipolaire monofilm selon l'invention peut être également utilisée dans le sens ouvert du courant pour une électrodialyse où elle remplit le rôle d'une membrane cation-sélective avec une sélectivité importante en faveur des cations métalliques monovalents et le rejet des cations métalliques bi- et multivalents.

## Revendications

1. Membrane monofilm comprenant au moins une interface hydrophile susceptible de dissocier l'eau en ses composants H⁺ et OH⁻, **caractérisée en ce qu'**elle comporte un ou plusieurs composés inorganiques choisis parmi le groupe constitué par les sels et/ou les hydroxydes comprenant un cation métallique des éléments de la colonne 2a, des éléments de transition, des éléments appartenant au groupe des lanthanides, des éléments appartenant au groupe des actinides du tableau de Mendeleev, de l'ion ammoniun, et/ou un mélange d'entre eux.

2. Membrane selon la revendication 1, **caractérisée en ce que** le composé inorganique est choisi parmi le groupe constitué par les sels et/ou les hydroxydes de titane, de zirconium, de vanadium, de niobium, de chrome, de molybdène, de tungstène, de manganèse, de fer, de ruthénium, d'osmium, de cobalt, de rhodium, de nickel, de paladium, de cuivre, d'argent, de zinc, de cadmium, de lanthane, de cérium, de thorium et/ou un mélange d'entre eux.

3. Membrane selon la revendication 1 ou 2, **caractérisée en ce que** le sel est formé à partir d'un ou de plusieurs oxyanions.

4. Membrane selon la revendication 3, **caractérisée en ce que** le sel est choisi parmi le groupe constitué par les tétraborates, les métaborates, les silicates, les métasilicates, les tungstates, les chlorates, les phosphates, les sulfates, les nitrates, les chromates, les carbonates, les molybdates, les chloroplatinates, les orthovanadates, les tellurates et/ou un mélange d'entre eux.

5. Membrane selon l'une quelconque des revendications précédentes, **caractérisée en ce que** le monofilm est une matrice polymérique.

6. Membrane selon la revendication 5, **caractérisée en ce que** la matrice est constituée de polymères choisis parmi le groupe constitué par le polyéthylène, le polychlorure de vinyle, le polytétrafluoroéthylène, le poly(vinylènedifluorure), l'éthylènetétrafluoroéthylène, le polystyrène, le polypropylène, le poly(fluoroéthylène propylène) et/ou un mélange d'entre eux.

7. Membrane selon la revendication 5 ou 6, **caractérisée en ce que** les polymères de la matrice polymérique sont greffés par du styrène.

8. Membrane selon l'une quelconque des revendications 5 à 7, **caractérisée en ce que** les polymères de la matrice polymérique sont réticulés par du divinylbenzène.

9. Membrane selon l'une quelconque des revendications précédentes, **caractérisée en ce qu'**elle comprend un ou plusieurs composés inorganiques introduits au niveau de l'interface hydrophile et/ou dans une couche échangeuse d'ions par électrodialyse, par diffusion et/ou par conditionnement.

10. Membrane selon l'une quelconque des revendications précédentes, **caractérisée en ce que** son épaisseur est comprise entre 50 et 150 microns.

11. Membrane selon l'une quelconque des revendications précédentes, **caractérisée en ce que** ladite membrane est une membrane bipolaire comportant une couche échangeuse d'anions et une couche échangeuse de cations.

12. Membrane selon la revendication 11, **caractérisée en ce que** 92 à 50 % de la membrane constitue la couche échangeuse de cations qui est chlorosulfonatée et hydrolysée par une solution basique et en ce que 8 à 50 % de la membrane constitue la couche échangeuse d'anions qui est chlorosulfonatée et aminée avec formation d'ammonium quaternaire.

13. Membrane selon l'une quelconque des revendications 1 à 10, **caractérisée en ce qu'**elle est une membrane ambibipolaire comportant une couche échangeuse de cations insérée entre deux couches échangeuses d'anions.

14. Procédé d'obtention d'une membrane bipolaire monofilm selon la revendication 11 ou 12, **caractérisé en ce qu'**on soumet une membrane monofilm constituée d'une matrice polymérique à un traitement de chlorosulfonation sur ses deux faces, suivi d'un traitement d'amination d'une des faces de la membrane et d'une quaternisation, l'autre face subissant une hydrolyse en milieu basique et en ce que l'on fait pénétrer ensuite dans ladite membrane un ou plusieurs composés inorganiques choisis parmi le groupe constitué par les sels et/ou les hydroxydes comprenant un cation métallique des éléments de la colonne 2a, des éléments de transition, des éléments appartenant au groupe des lanthanides, des éléments appartenant au groupe des actinides du tableau de Mendeleev, et/ou un mélange d'entre eux.

15. Procédé d'obtention d'une membrane bipolaire monofilm selon la revendication 13, **caractérisé en ce qu'**on soumet une membrane monofilm constituée d'une matrice polymérique à un traitement de chlorosulfonation sur ses deux faces, suivi d'un traitement d'amination des deux faces, on soumet ensuite la membrane à une hydrolyse en milieu basique et à une quaternisation des groupes amines et en ce que l'on fait pénétrer ensuite dans ladite membrane, un ou plusieurs composés inorganiques choisis parmi le groupe constitué par les sels et/ou les hydroxydes comprenant un cation métallique des éléments de la colonne 2a, des éléments de transition, des éléments appartenant au groupe des lanthanides, des éléments appartenant au groupe des actinides du tableau de Mendeleev, et/ou un mélange d'entre eux.

16. Procédé selon la revendication 14 ou 15, **caractérisé en ce qu'**on fait pénétrer dans la membrane monofilm un ou plusieurs composés inorganiques par électrodialyse, par diffusion et/ou par conditionnement.

17. Procédé selon l'une quelconque des revendications 14 à 16, **caractérisé en ce que** le traitement de chlorosulfonation s'effectue par trempage de la membrane dans une solution d'acide chlorosulfonique dans un sovant organique.

18. Procédé selon l'une quelconque des revendications 15 à 17, **caractérisé en ce que** le traitement d'amination s'effectue par écoulement d'une solution contenant une molécule choisie parmi le groupe constitué par une diamine, une polyamine et/ou un mélange de plusieurs polyamines sur l'une ou les deux faces de la membrane.

19. Procédé selon l'une quelconque des revendications 14 à 18, **caractérisé en ce que** l'hydrolyse en milieu basique s'effectue par une solution de NaOH ou de KOH.

20. Utilisation de la membrane monofilm selon l'une quelconque des revendications 1 à 13 pour la production d'acide et de base.

21. Utilisation de la membrane monofilm selon l'une quelconque des revendications 1 à 13 pour la régulation du pH d'une solution aqueuse.

22. Utilisation de la membrane monofilm selon l'une quelconque des revendications 1 à 12 pour l'électrodialyse d'une solution aqueuse.

## Patentansprüche

1. Aus einem Monofilm bestehende Membran, die wenigstens eine hydrophile Grenzschicht aufweist, welche in der Lage ist Wasser in seine Komponenten H⁺ und OH⁻ zu dissoziieren, **dadurch gekennzeichnet, dass** sie eine oder mehrere anorganische Verbindungen enthält, welche ausgewählt werden aus der Gruppe bestehend aus den Salzen und/oder den Hydroxyden mit einem metallischen Kation der Elemente der Kolonne 2a, der Übergangselemente, der Elemente der Gruppe der Lanthanide, der Elemente der Gruppe der Aktinide der Mendeleev'schen Tabelle, aus Ammoniumionen, und/oder aus einer Mischung derselben.

2. Membran gemäß Patentanspruch 1, **dadurch gekennzeichnet, dass** die anorganische Verbindung ausgewählt wird aus der Gruppe bestehend aus den Salzen und/oder den Hydroxyden von Titan, Zirkonium, Vanadium, Niobium, Chrom, Molybdän, Wolfram, Mangan, Eisen, Ruthenium, Osmium, Kobalt, Rhodium, Nickel, Palladium, Kupfer, Silber, Zink, Kadmium, Lanthan, Cer, Thorium und/oder aus einer Mischung derselben.

3. Membran gemäß Patentanspruch 1 oder 2, **dadurch gekennzeichnet, dass** das Salz gebildet wird ausgehend von einem oder von mehreren Oxyanionen.

4. Membran gemäß Patentanspruch 3, **dadurch gekennzeichnet, dass** das Salz ausgewählt wird aus der Gruppe bestehend aus Tetraboraten, Metaboraten, Silikaten, Metasilikaten, Wolframaten, Chloraten, Phosphaten, Sulfaten, Nitraten, Chromaten, Karbonaten, Molybdaten, Chlorplatinaten, Orthovanadaten, Telluraten und/oder aus einer Mischung derselben.

5. Membran gemäß irgendeinem der vorhergehenden Patentansprüche, **dadurch gekennzeichnet, dass** der Monofilm aus einer polymeren Matrix besteht.

6. Membran gemäß Patentanspruch 5, **dadurch gekennzeichnet, dass** die Matrix von den Mischpolymeren gebildet wird, welche ausgewählt werden aus der Gruppe bestehend aus Polyethylen, Polyvinylchlorid, Polytetra-fluorethylen, Poly(vinylendifluorid), Ethylentetrafluor-ethylen, Polystyrol, Polypropylen, Poly(fluorethylen-propylen) und/oder aus einer Mischung derselben.

7. Membran gemäß Patentanspruch 5 oder 6, **dadurch gekennzeichnet, dass** die Polymere der polymeren Matrix mit Styrol gepfropft sind.

8. Membran gemäß irgendeinem der Patentansprüche 5 bis 7, **dadurch gekennzeichnet, dass** die Polymere der polymeren Matrix mit Divinylbenzol vernetzt sind.

9. Membran gemäß irgendeinem der vorhergehenden Patentansprüche, **dadurch gekennzeichnet, dass** sie eine oder mehrere anorganische Verbindungen enthält, die in den Bereich der hydrophilen Grenzschicht und/oder in eine Ionen austauschende Schicht eingeführt werden durch Elektrodialyse, durch Diffusion und/oder durch Konditionieren.

10. Membran gemäß irgendeinem der vorhergehenden Patentansprüche, **dadurch gekennzeichnet, dass** ihre Dicke zwischen 50 und 150 Mikron beträgt.

11. Membran gemäß irgendeinem der vorhergehenden Patentansprüche, **dadurch gekennzeichnet, dass** die Membran eine bipolare Membran ist, welche eine Anionen austausche Schicht und eine Kationen austauschende Schicht enthält.

12. Membran gemäß Patentanspruch 11, **dadurch gekennzeichnet, dass** 92 bis 50 % der Membran die Kationen austauschende Schicht ausmachen, welche einer Chlorsulfonierung und einer Hydrolyse durch eine basische Lösung unterzogen werden und dass 8 bis 50 % der Membran die Ionen austauschende Schicht ausmachen, welche einer Chlorsulfonierung und einer Aminierung mit Bildung eines quaternären Ammoniums unterzogen werden.

13. Membran gemäß irgendeinem der Patentansprüche 1 bis 10, **dadurch gekennzeichnet, dass** sie aus einer ambibipolaren Membran besteht, welche eine Kationen austauschende Schicht enthält, welche zwischen zwei Anionen austauschenden Schichten eingelegt ist.

14. Verfahren zur Erzielung einer aus einem Monofilm bestehenden bipolaren Membran gemäß Patentanspruch 11 oder 12, **dadurch gekennzeichnet, dass** man eine aus einem Monofilm bestehende Membran, die von einer polymeren Matrix gebildet wird, einer Behandlung durch Chlorsulfonierung auf ihren zwei Flächen aussetzt, gefolgt von einer Behandlung durch Aminierung einer der Flächen der Membran und einer Quaternisierung, während die andere Fläche eine Hydrolyse in einem basischen Medium erfährt und dass man alsdann in die besagte Membran eine oder mehrere anorganische Verbindungen eindringen lässt, die ausgewählt werden aus der Gruppe bestehend aus den Salzen und/oder den Hydroxyden mit einem metallischen Kation der Elemente der Kolonne 2a, der Übergangselemente, der Elemente der Gruppe der Lanthanide, der Elemente der Gruppe der Aktinide der Mendeleev'schen Tabelle, aus Ammoniumionen, und/oder aus einer Mischung derselben.

15. Verfahren zur Erzielung einer aus einem Monofilm bestehenden bipolaren Membran gemäß Patentanspruch 13, **dadurch gekennzeichnet, dass** man eine aus einem Monofilm bestehende Membran, die von einer polymeren Matrix gebildet wird, einer Behandlung durch Chlorsulfonierung auf ihren zwei Flächen unterzieht, gefolgt von einer Behandlung durch Aminierung der zwei Flächen, dass man die Membran alsdann einer Hydrolyse in einem basischen Medium und einer Quaternisierung der Amingruppen unterzieht und dass man alsdann in die besagte Membran eine oder mehrere anorganische Verbindungen eindringen lässt, welche ausgewählt werden aus der Gruppe bestehend aus den Salzen und/oder den Hydroxyden mit einem metallischen Kation der Elemente der Kolonne 2a, der Übergangselemente, der Elemente der Gruppe der Lanthanide, der Elemente der Gruppe der Aktinide der Mendeleev'schen Tabelle, aus Ammoniumionen, und/oder aus einer Mischung derselben.

16. Verfahren gemäß Patentanspruch 14 oder 15, **dadurch gekennzeichnet, dass** man in die aus einem Monofilm bestehende Membran eine oder mehrere anorganische Verbindungen durch Elektrodialyse, durch Diffusion und/oder durch Kontizionieren eindringen lässt.

17. Verfahren nach irgendeinem der Patentansprüche 14 bis 16, **dadurch gekennzeichnet, dass** die Behandlung der Chlorsulfonierung durchgeführt wird durch Eintauchen der Membran in eine Lösung von Chlorsulfonsäure in einem organischen Lösungsmittel.

18. Verfahren nach irgendeinem der Patentansprüche 15 bis 17, **dadurch gekennzeichnet, dass** die Behandlung der Aminierung durchgeführt wird durch Abfließenlassen einer Lösung, die ein Molekül enthält das ausgewählt wird aus der Gruppe bestehend aus einem Diamin, einem Polyamin und/oder einer Mischung von mehreren Polyaminen, über eine oder über zwei Flächen der Membran.

19. Verfahren nach irgendeinem der Patentansprüche 14 bis 18, **dadurch gekennzeichnet, dass** die Hydrolyse in dem basischem Medium durchgeführt wird mit einer Lösung von NAOH oder von KOH.

20. Anwendung der aus einem Monofilm bestehenden Membran gemäß irgendeinem der Patentansprüche 1 bis 13 für die Herstellung von Säure und von Base.

21. Anwendung der aus einem Monofilm bestehenden Membran gemäß irgendeinem der Patentansprüche 1 bis 13 für die Regelung der pH Werte einer wässerigen Lösung.

22. Anwendung der aus einem Monofilm bestehenden Membran gemäß irgendeinem der Patentansprüche 1 bis 12 für die Elektrodialyse einer wässerigen Lösung.

## Claims

1. Single-film membrane including at least one hydrophilic interface capable of dissociating water into its components H⁺ and OH⁻, **characterized in that** it comprises one or more inorganic compounds selected from the group consisting of the salts and/or the hydroxides comprising a metallic cation of the elements of column 2a, of the transition elements, of the elements belonging to the lanthanide group, of the elements belonging to the actinide group of Mendeleev's Table, of the ammonium ion and/or a mixture thereof.

2. Membrane according to Claim 1, **characterized in that** the inorganic compound is selected from the group consisting of the salts and/or the hydroxides of titanium, zirconium, vanadium, niobium, chromium, molybdenum, tungsten, manganese, iron, ruthenium, osmium, cobalt, rhodium, nickel, paladium, copper, silver, zinc, cadmium, lanthanum, cerium, thorium and/or a mixture thereof.

3. Membrane according to Claim 1 or 2, **characterized in that** the salt is formed from one or more oxyanions.

4. Membrane according to Claim 3, **characterized in that** the salt is selected from the group consisting of tetraborates, metaborates, silicates, metasilicates, tungstates, chlorates, phosphates, sulfates, nitrates, chromates, carbonates, molybdates, chloroplatinates, orthovanadates, tellurates and/or a mixture thereof.

5. Membrane according to any one of the preceding claims, **characterized in that** the single film is a polymeric matrix.

6. Membrane according to Claim 5, **characterized in that** the matrix consists of polymers selected from the group consisting of polyethylene, polyvinyl chloride, polytetrafluoroethylene, poly(vinylene difluoride), ethylenetetrafluoroethylene, polystyrene, polypropylene, poly(fluoroethylene propylene) and/or a mixture thereof.

7. Membrane according to Claim 5 or 6, **characterized in that** the polymers of the polymeric matrix are grafted with styrene.

8. Membrane according to any one of Claims 5 to 7, **characterized in that** the polymers of the polymer matrix are crosslinked with divinylbenzene.

9. Membrane according to any one of the preceding claims, **characterized in that** it includes one or more inorganic compounds introduced at the hydrophilic interface and/or into an ion exchange layer by electrodialysis, by diffusion and/or by conditioning.

10. Membrane according to any one of the preceding claims, **characterized in that** its thickness is between 50 and 150 microns.

11. Membrane according to any one of the preceding claims, **characterized in that** said membrane is a bipolar membrane comprising an anion exchange layer and a cation exchange layer.

12. Membrane according to Claim 11, **characterized in that** 92 to 50 % of the membrane constitutes the cation exchange layer, which is chlorosulfonated and hydrolyzed with a basic solution and in that 8 % to 50 % of the membrane constitutes the anion exchange layer, which is chlorosulfonated and aminated with formation of quaternary ammonium

13. Membrane according to any one of Claims 1 to 10, **characterized in that** it is an ambibipolar membrane comprising a cation exchange layer inserted between two anion exchange layers.

14. Process for obtaining a single-film bipolar membrane according to Claim 11 or 12, **characterized in that** a single-film membrane consisting of a polymeric matrix is subjected to a chlorosulfonation treatment on its two faces, followed by an amination treatment of one of the faces of the membrane and a quaternization, the other face undergoing a hydrolysis in basic medium, and one or more inorganic compounds selected from the group consisting of the salts and/or the hydroxides of the elements of column 2a, of the transition elements, of the elements belonging to the lanthanide group, of the elements belonging to the actinide group of Mendeleev's Table and/or a mixture thereof are caused to enter said membrane.

15. Process for obtaining a single-film ambibipolar membrane according to Claim 13, **characterized in that** a single-film membrane consisting of a polymeric matrix is subjected to a chlorosulfonation treatment on its two faces, followed by an amination treatment of the two faces, the membrane is next subjected to a hydrolysis in basic medium and to a quaternization of the amine groups and one or more inorganic compounds selected from the group consisting of the ammonium ion, the salts and/or the hydroxides of the elements of column 2a, of the transition elements, of the elements belonging to the lanthanide group, of the elements belonging to the actinide group of Mendeleev's Table and/or a mixture thereof are caused to enter said membrane.

16. Process according to Claim 14 or 15, **characterized in that** one or more inorganic compounds are caused to enter the single-film membrane by electrodialysis, by diffusion and/or by conditioning.

17. Process according to any one of the preceding Claims 14 to 16, **characterized in that** the chlorosulfonation treatment is performed by immersing the membrane in a solution of chlorosulfonic acid in an organic solvent.

18. Process according to any one of the preceding Claims 15 to 17, **characterized in that** the amination treatment is performed by running a solution containing a molecule selected from the group consisting of a diamine, a polyamine and/or a mixture of a number of polyamines over one or the two faces of the membrane.

19. Process according to any one of Claims 14 to 18, **characterized in that** the hydrolysis in basic medium is performed using a solution of NaOH or of KOH.

20. Use of the single-film membrane according to any one of Claims 1 to 13 for the production of acid and base.

21. Use of the single-film membrane according to any one of Claims 1 to 13 for the control of the pH of an aqueous solution.

22. Use of the single-film membrane according to any one of Claims 1 to 12 for the electrodialysis of an aqueous solution.
